Europäisches Patentamt

European Patent Office

Office européen des brevets

(11) Publication number: **0 386 971**
**A1**

## (12) EUROPEAN PATENT APPLICATION

(21) Application number: 90302296.0

(51) Int. Cl.⁵: **G11B 7/26, G11B 7/24**

(22) Date of filing: 05.03.90

(30) Priority: 06.03.89 JP 52079/89
25.11.89 JP 305103/89

(43) Date of publication of application:
**12.09.90 Bulletin 90/37**

(84) Designated Contracting States:
**GB NL**

(71) Applicant: **Hitachi Maxell Ltd.**
**No 1-1-88, Ushitora Ibaraki-shi**
**Osaka-fu(JP)**

(72) Inventor: **Sugiyama, Toshinori**
**1296-1 Tanaka**
**Tsukuba-shi(JP)**
Inventor: **Kanazawa, Yasunori**
**22-5 Nishinodai, Yawaramura**
**Tsukuba-gun, Ibaraki-ken(JP)**
Inventor: **Sonobe, Takeo**
**2-2-302 Togashira-1-chome**
**Toride-shi(JP)**
Inventor: **Tanaka, Yoshito**
**1816-4 Shimoinayoshi, Chiyodamura**
**Niihari-gun, Ibaraki-ken(JP)**
Inventor: **Fukutake, Sunao**
**6139-1 Onogomachi Mitsukaido-shi**
**Ibaraki-ken 300-25(JP)**
Inventor: **Miura, Makoto**
**2-5 Kubogaoka-4-chome Moriyamachi**
**Kitasoma-gun Ibaraki-ken(JP)**

(74) Representative: **Williams, Trevor John et al**
**J.A. KEMP & CO. 14 South Square Gray's Inn**
**London WC1R 5EU(GB)**

(54) **Method of producing optical disk, jig for carrying out the method, and optical disk produced by the method.**

(57) According to a method of producing an optical disk, comprising the steps of providing a jig having a cylindrical portion and a center pin formed on said cylindrical portion coaxially therewith; providing a transparent substrate having a reference hole formed therein at its central portion and disposed coaxially with an imaginary center of beam-tracking tracks, on the substrate, constituted by preformed pits and projections which tracks are spaced at predetermined intervals radially outwardly of the reference hole; fitting said cylindrical portion of the jig into the reference hole in the transparent substrate; and inserting the center pin of said jig into a spindle hole, formed in a spindle hole-containing member, against movement relative to the spindle hole, and subsequently securing the spindle hole-containing member to a central portion of the transparent substrate while keeping the relative position thereof the spindle hole being smaller in diameter than the reference hole in the transparent substrate, concentricity of the reference hole and the spindle hole can be easily attained.

F I G. I

# METHOD OF PRODUCING OPTICAL DISK, JIG FOR CARRYING OUT THE METHOD, AND OPTICAL DISK PRODUCED BY THE METHOD

## BACKGROUND OF THE INVENTION

This invention relates generally to an optical disk for use, for example, in an optical disk cartridge, and more particularly to an optical disk of the type which comprises a transparent substrate having beam-guiding (beam-tracking) tracks of preformed pits and projections such as preformed grooves, and a spindle hole-containing member (for example, a center hub having a spindle hole therethrough) bonded or adhered to the transparent substrate, and also to a jig for assembling such an optical disk and a method of producing such an optical disk.

One known method of producing an optical disk is a photosensitive resin method (photopolymer method; hereinafter referred to as "2P method"). Briefly, in such 2P method, a liquidified photosensitive resin such as an ultraviolet ray-curing resin is filled in a gap between a stamper and a transparent substrate to form a photosensitive resin film. Then, light is irradiated onto the transparent substrate to cure the photosensitive resin film. Subsequently, the transparent substrate, together with the cured photosensitive resin film (replica film), is separated from the stamper, thereby providing an optical disk.

In this 2P method, however, when the photosensitive resin is to be filled in the gap between the stamper and the transparent substrate, extreme care must be taken to ensure that bubbles and dirt will not be introduced into the photosensitive resin. In addition, care must be taken so that the replica film, when separated from the stamper, will not have flaws caused, for example, by an imperfect separation. Thus, a strict production control is needed, and for this reason the 2P method is not suited for mass-production purposes. A further problem is that during use or storage of the optical disk, the replica film is gradually peeled or separated from the transparent substrate, thus shortening the lifetime of the optical disk.

In order to overcome the drawbacks of the above 2P method, there have been proposed an injection method, a compression method and an injection-compression method (which are hereinafter referred to as "molding method") all of which do not use a replica film. In such a molding method, a stamper is used as one of molds, and when a transparent substrate is to be molded, beam-guiding tracks of pits and projections, such as preformed grooves and preformed pits, are formed directly in the transparent substrate.

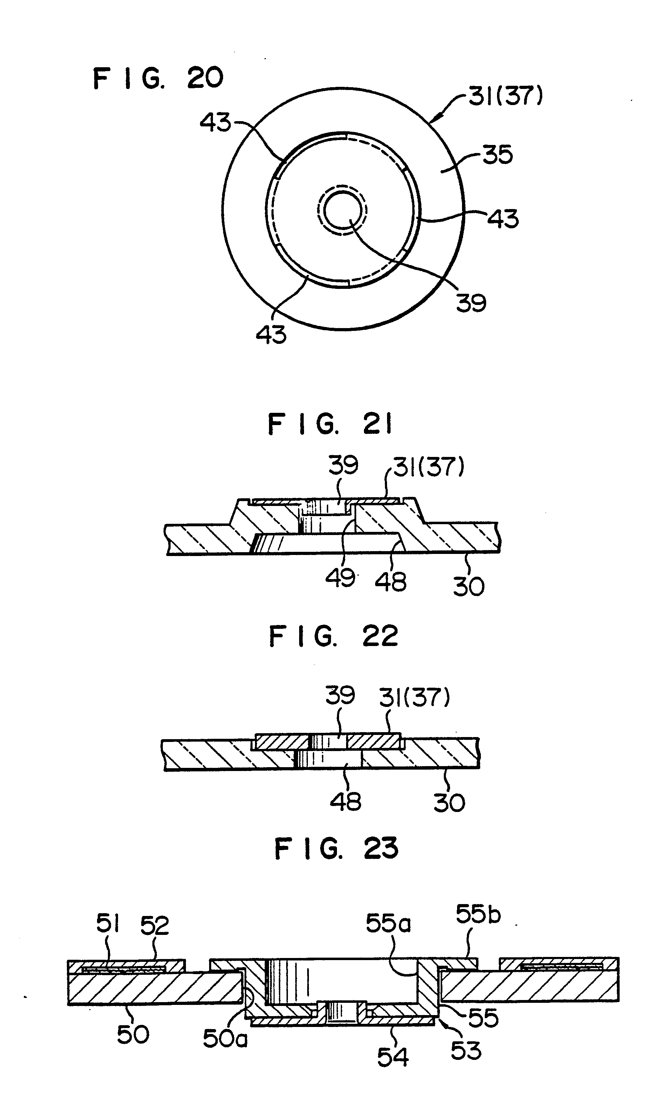

Fig. 23 is a sectional view of an optical disk which has earlier been proposed by the inventors of the present invention in their company but has not yet been known to the public.

In Fig. 23, a transparent substrate 50 has a center hole 50a formed therethrough, and a recording layer 51 is formed on one side or face of the transparent substrate 50, and a protective layer 52 covers the recording layer 51. A center hub 53 comprises a holder 55 and a magnetic plate 54 secured to the holder 55.

When the optical disk is loaded into a disk drive device (not shown), the magnetic plate 54 is magnetically attracted by a permanent magnet mounted on a turntable (spindle hub) of the disk drive device, thus providing a so-called magnet-clamping. The magnetic plate 54 and the holder 55 of a synthetic resin are beforehand connected integrally with each other by an adhesive or the like. A cylindrical portion 55a of the holder 55 is fitted in the center hole 50a of the transparent substrate 50, and a flange 55b of the holder 55 is secured to the transparent substrate 50 by an adhesive or the like, so that the transparent substrate 50 and the center hub 53 are connected integrally with each other.

In this construction, however, because of dimensional inaccuracies of the center hub 53 (which are unavoidable in the manufacture) or inaccuracy of the fitting of the center hub 53 in the transparent substrate 50, the imaginary center of the tracks of the preformed grooves in the transparent substrate 50 is displaced with respect to the center or axis of the center hub 53 to an unacceptable extent, which results in an imperfect product (optical disk).

Therefore, the imaginary center of the tracks of the preformed grooves was measured using an optical measurement means, and the relative position between the transparent substrate 50 and the center hub 53 was so controlled that the imaginary center of the tracks of the preformed grooves was aligned or registered with the axis of the center hub 53, and then the transparent substrate 50 and the center hub 53 were adhesively bonded together.

With this method, however, with respect to each optical disk, it is necessary to measure the imaginary center of the tracks of the preformed grooves in the transparent substrate 50, and the measurement of this imaginary center as well as the registration or positioning of the center hub 53 relative to the transparent substrate 50 is very complicated and requires much time, which results in a problem that a high production efficiency is not achieved.

## SUMMARY OF THE INVENTION

With the above deficiencies in view, it is an object of this invention to provide a method capable of producing optical disks stable in quality efficiently on a mass-production basis, and to provide a jig used for performing such a method as well as the optical disk produced thereby.

According to a first aspect of the present invention, there is provided a method of producing an optical disk, comprising the steps of:
providing a jig having a cylindrical portion and a center pin formed on the cylindrical portion coaxially therewith;
providing a transparent substrate having a reference hole formed therein at its central portion and disposed coaxially with an imaginary center of beam-tracking tracks, on the substrate, constituted by preformed pits and projections which tracks are spaced at predetermined intervals radially outwardly of the reference hole;
fitting the cylindrical portion of the jig into the reference hole in the transparent substrate; and
inserting the center pin of the jig into a spindle hole, formed in a spindle hole-containing member, against movement relative to the spindle hole, and subsequently securing the spindle hole-containing member to a central portion of the transparent substrate while keeping relative positions thereof, the spindle hole being smaller in diameter than the reference hole in the transparent substrate.

According to a second aspect of the present invention, there is provided a jig for assembling an optical disk includes:
a cylindrical portion adapted to be fitted in a registration reference hole formed in a transparent substrate at its central portion, the transparent substrate having beam-tracking tracks of preformed pits and projections which tracks are spaced at predetermined intervals radially outwardly of the reference hole and are concentrical therewith; and
a center pin formed integrally on the cylindrical portion coaxially therewith, the center pin being adapted to be inserted into a spindle hole formed in a spindle hole-containing member at a central portion thereof.

According to a third aspect of the present invention, there is provided an optical disk comprising:
a transparent substrate having a registration reference hole formed therein at its central portion, the transparent substrate having beam-tracking tracks of preformed pits and projections which tracks are spaced at predetermined intervals radially outwardly of the reference hole and are concentrical therewith; and
a spindle hole-containing member having a spindle hole smaller in diameter than the reference hole in the transparent substrate, the spindle hole-containing member being positioned relative to the transparent substrate by means of a jig in such a manner that the axis of rotation of the spindle hole is aligned with the axis of the reference hole disposed coaxially with a tracking center of the optical disk, and the spindle hole-containing member being fixedly secured to the transparent substrate.

The transparent substrate and the spindle hole-containing member are set or positioned on the jig having the cylindrical portion and the center pin coaxially formed integrally therewith, so that the imaginary center of the beam-tracking tracks of pits and projections is automatically aligned with the center or axis of the spindle hole in the spindle hole-containing member. Therefore, a high mass-production efficiency is achieved, and the quality of the optical disk can be made stable.

## BRIEF DESCRIPTION OF THE DRAWINGS

The foregoing and other objects, features and advantageous effects will be made clearer from description of preferred embodiments referring to attached drawings in which:

Fig. 1 is a partly-broken, perspective view of an optical disk produced by a method according to a first embodiment of the present invention, showing the manner in which an optical disk substrate and a center hub are registered or positioned relative to each other, using an assembling jig;

Fig. 2 is an exploded perspective view, showing the optical disk substrate, the center hub and the jig;

Fig. 3 is an enlarged perspective view of the center hub;

Fig. 4 is a sectional view of the optical disk according to the first embodiment;

Fig. 5 is a sectional view of a second embodiment of an optical disk of the present invention;

Fig. 6 is a perspective view of a modified center hub;

Fig. 6A is a partly-broken perspective view of a modified optical disk having the center hubs of Fig. 6;

Fig. 7 is a perspective view of a modified magnetic plate;

Fig. 8 is a sectional view showing a third embodiment of the present invention;

Fig. 9 is a plan view of an optical disk cartridge containing a modified optical disk (fourth embodiment of the invention), having a shutter in its closed condition;

Fig. 10 is a view similar to Fig. 9, but having the shutter in its open condition;

Fig. 11 is a sectional view of the optical disk of Fig. 9;

Fig. 12 is¹ view of a center hub of the optical disk of F

Fig. 13 is¹tional view of the center hub of Fig. 12;

Fig. 14 is om view of the center hub of Fig. 12;

Fig. 15 is¹larged, sectional view of an inner peripheral ¹ of the center hub of Fig. 12 in the vicinity of ndle hole;

Fig. 16 is¹larged, sectional view of an outer peripheral in of the center hub of Fig. 12;

Fig. 17 is lan view of a jig used for assembling the o disk;

Fig. 18 is ⁾tional view of a portion of a further modified al disk (fifth embodiment of the invention);

Fig. 19 is ional view of a center hub of the optical disk of 18;

Fig. 20 is in view of the center hub of Fig. 19;

Fig. 21 is ¹nlarged sectional view of a further modified al disk (sixth embodiment of the invention);

Fig. 22 is ʼiew similar to Fig. 21 but showing a furthendified optical disk (seventh embodiment of theention); and

Fig. 23 is a tional view of an optical disk which has been eɑr proposed by the inventors of the present inveㅇn but not yet known to the public.

## DESCRIPTION OF HE ʔREFERRED EMBODIMENTS OF THE INᴠENTICᴵ

Preferred embodmentsʲf optical disks of the present invention will now b₎ described with reference to the drawings in wᴉich like or identical reference numerals denote ᴏrresponding parts in several views.

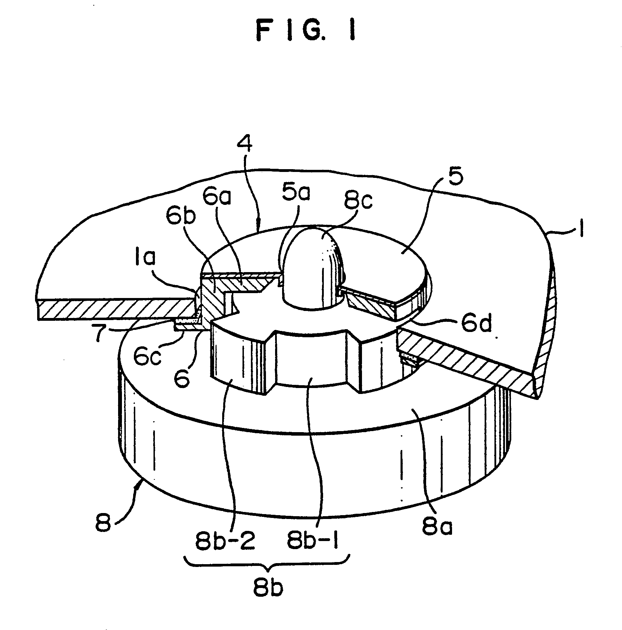

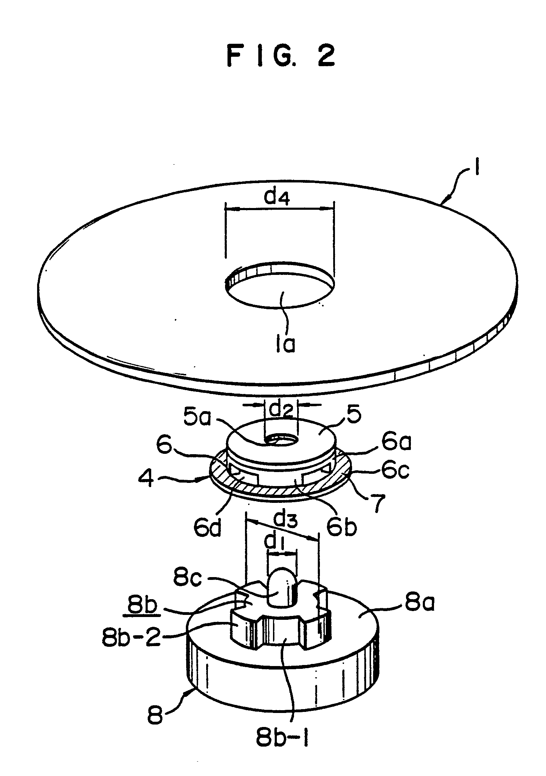

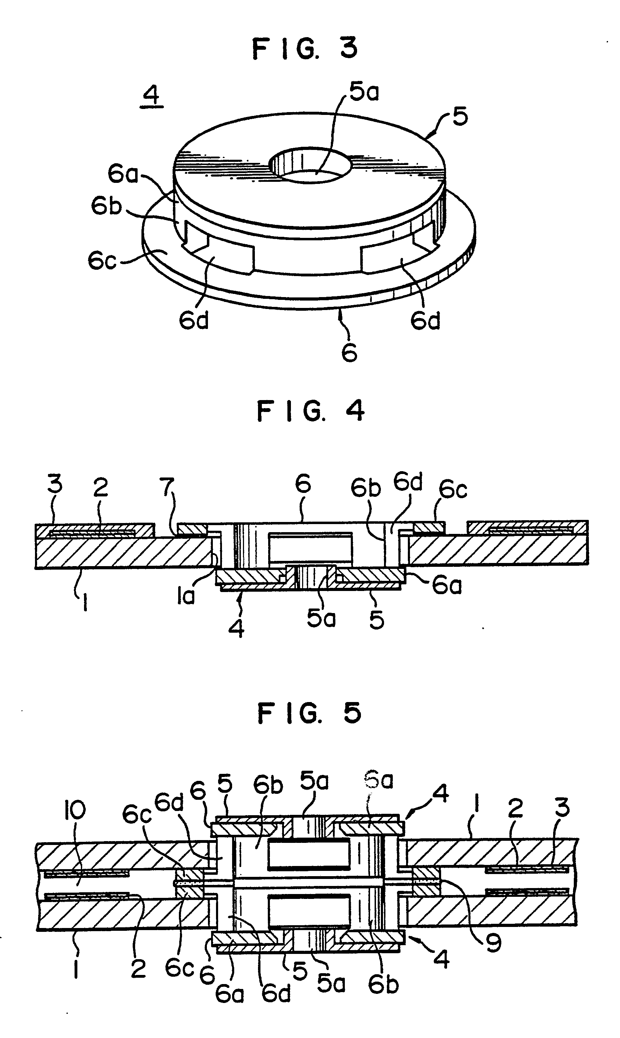

Figs. 1 to 4 shows a firㄴ embodiment of the present invention. Fig. 1 is ⅈ partly-broken perspective view of main portionㄴ showing the manner in which an optical disc suⱳstrate and a center hub are registered or positiored with respect to each other by the use of an assembling jig. Fig. 2 is an exploded perspective vieᴎ, showing the optical disk substrate, the center hꭐb and the jig. Fig. 3 is an enlarged perspective vꞮew of the center hub. Fig. 4 is a sectional view of the optical disc.

In Fig. 4, the transparent subㄴtrate 1 is molded of a synthetic resɪn such as polʏcarbonate and polymethyl methacrylate, by an ɪᴎjection molding method. Simultaneously with the molding of the transparent substrate 1, tracks of preformed grooves are formed in signal recarding regions of

the optical disk. The transparent substrate 1 has a reference hole 1a formed therethrough at its central portion for registration purposes. The reference hole 1a is precisely finished into a true circular shape. The transparent substrate 1 is molded so precisely that the amount of eccentricity of the imaginary center of the track of the preformed grooves from the center (axis) of the reference hole 1a falls within a predetermined allowable range. A recording layer 2 is formed on one side or face of the optical disk substrate 1, and has the abovementioned preformed grooves. A protective layer 3 is provided to cover the recording layer 2. In the present invention, the recording layer 2 may be of any kind and type, and the present invention is also applicable to a construction or structure of the type in which there is not used the protective layer covering the recording layer 2.

The center hub 4 comprises a disk-shaped magnetic plate 5 for magnet clamping, and a holder 6 of a synthetic resin. Although the magnetic plate 5 and the holder 6 are fixed together by an adhesive or by fusion, they may be integral with each other by insert molding. The magnetic plate 5 is made, for example. of a magnetic stainless steel (SUS 430), and the outer diameter of the magnetic plate 5 is slightly smaller than the diameter of the center hole 1a of the optical disk substrate 1. The magnetic plate 5 has a spindle hole 5a formed therethrough at the central portion thereof, and the spindle hole 5a is also precisely formed into a true circular shape. A center pin of a jig is inserted into the spindle hole 5a for registration or alignment purposes when an assembling and registration step is carried out as later described. In addition, after the optical disk is produced. a center pin of a spindle hub of a disk drive device is adapted to be inserted into the spindle hole 5a to effect the positioning or registration of the optical disk.

As best shown in Fig. 3, the holder 6 has a support disk portion 6a for supporting the magnetic plate 5. a short (flattened) cylindrical portion (boss of the hub) 6b continuous with the support disk portion 6a, and a thin flange 6c of a ring-shape formed on the end of the cylindrical portion 6b remote from the support disk portion 6a. The support disk portion 6a, the cylindrical portion 6b and the flange 6c are formed integrally with one another to provide a one-piece construction. A plurality of (four in this embodiment) notches or openings 6d are formed in the cylindrical portion 6b and are circumferentially spaced from one another at equal intervals. The outer diameter of the cylindrical portion 6b disposed within the reference hole 1a of the transparent substrate 1 is slightly smaller than the diameter of the reference hole 1a. In this embodiment, there is provided a clearance or gap of about several tens of $\mu$m or more between the peripheral surface of the reference hole 1a and the outer peripheral surface of the cylindrical portion 6b.

As shown in Fig. 4, the flange 6c of the holder 6 is fixedly secured or bonded by an adhesive 7 to that side of the transparent substrate 1 on which the recording layer 2 is formed. With this construction, when the optical disk is set on the spindle hub of the disk drive device, a magnetic attractive force produced by a permanent magnet of this spindle hub acts on the magnetic plate 5 in such a manner as to urge the transparent substrate 1 toward the bonding surface of the center hub 4 (i.e., the flange 6c), thereby eliminating the possibility that the bonding surfaces of the two are separated from each other.

For registering the transparent substrate 1 with the center hub 4 and for integrally connecting them together, a registration jig 8 shown in Figs. 1 and 2 is used. The jig 8 is made of a wear-resistant material such as stainless steel (SUS 304 or ferrite-type SUS). The jig 8 has a base portion 8a, and a short cylindrical portion 8b formed on the base portion 8a, and a center pin 8c formed on the cylindrical portion 8b. The central axis of the cylindrical portion 8b is precisely aligned with the central axis of the center pin 8c, and their outer peripheral surfaces are precisely finished into a true circular shape.

As shown in Fig. 2, the outer diameter d3 of the cylindrical portion 8b is substantially equal to the diameter d4 of the reference hole 1a in the transparent substrate 1, and the outer diameter d1 of the center pin 8c is equal to the diameter d2 of the spindle hole 5a in the magnetic plate 5.

A plurality of (four in this embodiment) fan-shaped notches 8b-1 are formed or cut in the outer peripheral portion of the cylindrical portion 8b, and are circumferentially spaced from one another at equal intervals, so that a plurality of (four in this embodiment) fan-shaped projections 8b-2 are provided. The fan-shaped projections 8b-2 are so arranged as to correspond respectively to the notches 6d in the cylindrical portion 6b of the holder 6, so that the projections 8b-2 can be fitted in the notches 6d, respectively.

When the transparent substrate 1 and the center hub 4 are to be adhesively bonded together, the adhesive 7, such as an ultraviolet ray-curing adhesive, an epoxy-type adhesive and a urethane-type adhesive, is beforehand coated uniformly on the upper surface of the flange 6c of the holder 6, as indicated by hatching in Fig. 2. Then, the center pin 8c of the jig 8 is inserted into the spindle hole 5a of the hub 4 (d1 = d2), and at the same time the fan-shaped projections 8b-2 of the jig 8 are inserted respectively into the notches 6d formed in the cylindrical portion 6b of the holder 6, thereby first setting the center hub 4 in position on the jig 8.

Then, in this condition, the cylindrical portion 6b of the center hub 4 is inserted into the reference hole 1a of the transparent substrate 1, so that that the outer peripheral surfaces of the fan-shaped projections 8b-2, exposed outwardly through the respective notches 6d in the cylindrical portion 6b and partly in the flange 6c, are brought into contact with the inner peripheral surface of the reference hole 1a (d3 = d4). Fig. 1 shows this condition in which the axis of the reference hole 1a in the transparent substrate 1 is aligned with the axis of the spindle hole 5a in the center hub 4 by the jig 8. In this condition, by curing the adhesive 7, the imaginary center of the tracks of the preformed grooves in the transparent substrate 1 is maintained precisely in alignment with the axis of the center hub 4.

Therefore, the imaginary center of the tracks of the preformed grooves does not need to be aligned with the axis of the center hub 4 by means of the conventionally-used optical measurement, and the transparent substrate 1 can be registered with the center hub 4 efficiently and accurately, thereby improving the production efficiency.

In view of dimensional irregularities of the outer diameter of the cylindrical portion 6b of the holder 6, dimensional irregularities of the diameter of the reference hole 1a of the transparent substrate 1 (those irregularities are unavoidable in the manufacture) and burrs formed on the peripheral edges of the reference hole 1a and the cylindrical portion 6b, it has been confirmed through experiment that the outer diameter of the cylindrical portion 6b should preferably be smaller than the diameter of the reference hole 1a by at least 0.05 mm, and more preferably should be smaller by at least 0.1 mm. In this embodiment, the outer diameter of the cylindrical portion 6b is 0.06 mm smaller than the diameter of the reference hole 1a.

As shown in Fig. 3, those portions of the inner periphery of the flange 6c of the holder 6 disposed immediately adjacent respectively to the notches 6d are cut or notched radially outwardly beyond the diameter of the reference hole 1a of the transparent substrate 1 so as not to interfere with the arcuate outer peripheral surfaces of the fan-shaped projections 8b-2 of the jig 8.

For precisely registering the reference hole 1a of the transparent substrate 1 with the arcuate outer peripheral surfaces of the fan-shaped projections 8b-2 of the jig 8, it has also been confirmed through experiment that it is very advantageous to effect such registration by press-fitting the reference hole 1a of the transparent substrate 1 around the arcuate outer peripheral surfaces of the fan-shaped projections 8b-2, particularly when the transparent substrate 1 is molded of a synthetic resin. In this case, it has been confirmed that the amount of this press-fitting should preferably be about 0.01 mm to 0.05 mm (that is, d3 - d4 = about 0.01 mm to 0.05 mm) because of an easier press-fitting and a higher precision of the registration.

It is preferred that the material of the transparent substrate 1 be equal or approximate in coefficient of thermal expansion to the material of the center hub 4. In this embodiment, the transparent substrate 1 and the center hub 4 are both molded of polycarbonate, and therefore have the same coefficient of thermal expansion.

Although the optical disk of a single-sided type has been described in Figs. 1 to 4, the present invention is also applicable to a double-sided optical disk. Fig. 5 shows a double-sided optical disk of an air-sandwich construction or structure.

In this second embodiment of the present invention shown in Fig. 5, two transparent substrates 1 and 1 are disposed in opposed relation to each other, with their respective recording layers 2 directed inwardly. Flanges 6c of two center hubs 4 fixedly secured respectively to the transparent substrates 1 may be bonded together by an adhesive 9. In the case where the two transparent substrates 1 are bonded together through a separate spacer disposed radially outwardly of the two flanges 6c, the two flanges 6c are not necessarily be bonded together.

The two flanges 6c also perform the function of an inner peripheral spacer for providing an air gap 10 of a predetermined thickness between the two transparent substrates 1 and 1, and although not shown in the drawings, an outer peripheral spacer is interposed between the outer peripheral portions of the two transparent substrates 1 and 1. Thus, as in this embodiment, when the two flanges 6c are designed to serve also as the inner peripheral spacer, the number of the component parts as well as the cost are reduced.

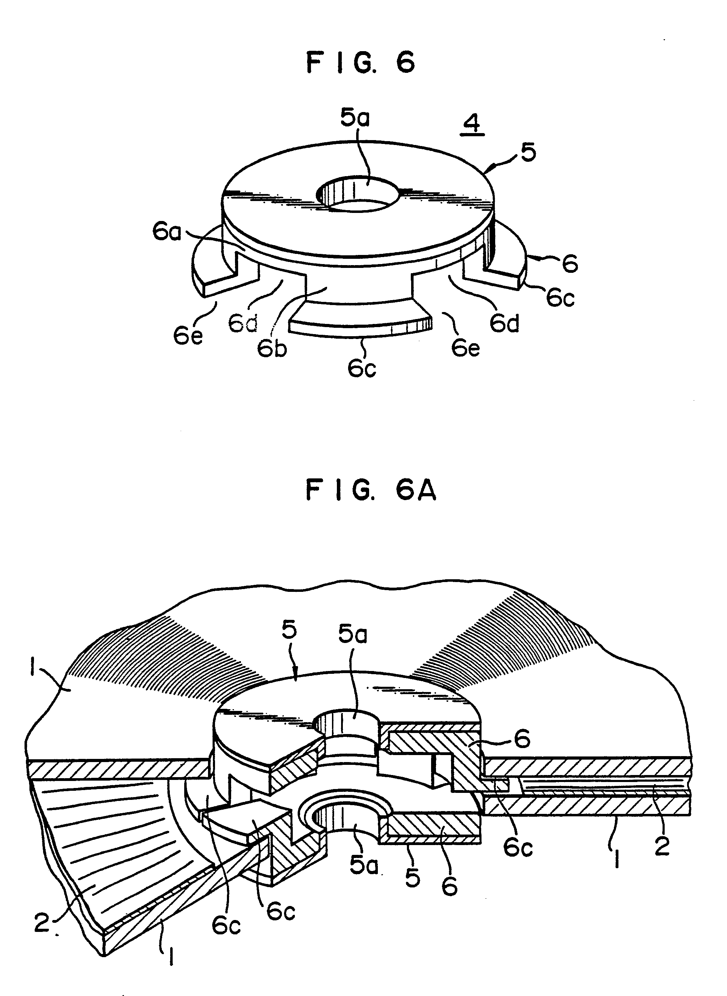

Fig. 6 is a perspective view of a modified form of the center hub 4. In this case, notches 6e are formed in the flange 6c, and are continuous with the notches 6d, respectively, so that the flange 6c has flanges sections circumferentially spaced from one another by the notches 6e. The two transparent substrates 1 and 1 to which the two center hubs 4 and 4 with the notches 6e are fixedly secured, respectively, are mated together in such a manner that the alternate flange sections and notches 6e of one of the two flanges 6c are fittingly engaged with the alternate notches 6e and flange sections of the other flange 6c, respectively, thereby assembling a double-sided optical disk of an air-sandwich construction. With this arrangement, the gap 10 between the two transparent substrates 1 and 1 is reduced in thickness, so that the overall thickness of the product (optical disk) can be reduced.

Fig. 6A shows the section of one example of an optical disk of the present invention employing the modified center hubs 4 of Fig. 6. In this case, first and second transparent substrates 1 and 1 to which the two center hubs 4 and 4 of Fig. 6 with the notches 6e are fixedly secured, respectively, are disposed in such a manner that their respective flanges 6c are disposed in opposed relation to each other. Then, the alternate flange sections and notches 6e of one of the two flanges 6c are fittingly engaged with the alternate notches 6e and flange sections of the other flange 6c, respectively, so that the two flanges 6c jointly forms a flange of one layer. Thus, the first and second transparent substrates 1 as well as the two flanges 6c are connected together to provide the optical disk of a unitary construction.

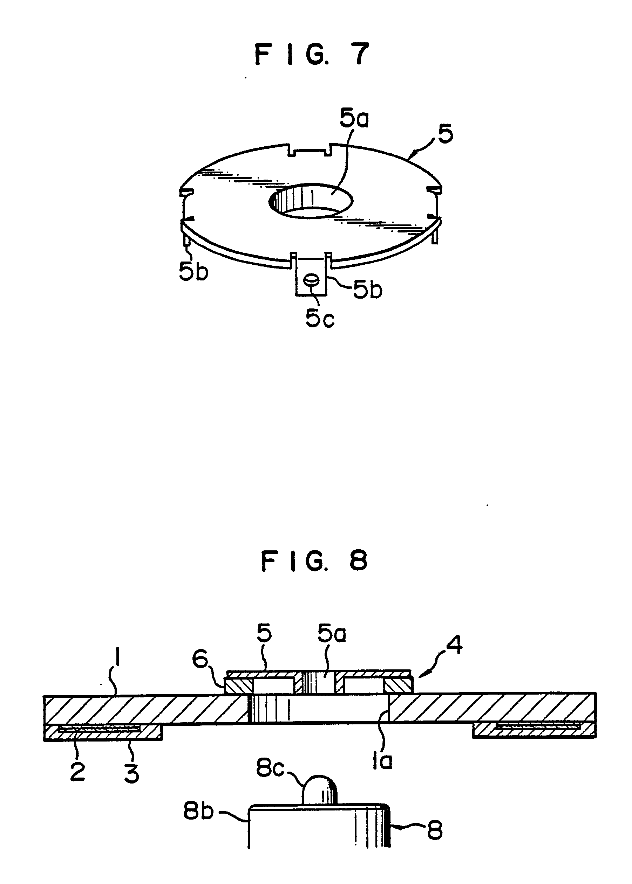

Fig. 7 is a perspective view of a modified magnetic plate 5. In this case, a plurality of depending portions 5b depend from the outer periphery of the magnetic plate 5, and a disengagement preventing portion 5c in the form of a through hole is provided at each depending portion 5b. The disengagement preventing portion 5c may be in any other suitable form such as a notch and a bent section. The depending portions 5b are embedded in the holder 6, so that the strength of connection between the magnetic plate 5 and the holder 6 is increased, thereby positively preventing the magnetic plate 5 from being disengaged from the holder 6.

Fig. 8 is a sectional view showing a third embodiment of the present invention. In this embodiment, as shown in Fig. 8, a center hub 4 comprises a ring-shaped holder 6, and a magnetic plate 5 bonded to an upper surface of the holder 6. The holder 6 is fixedly secured to a transparent substrate 1 by an adhesive. The diameter of a reference hole 1a formed through the transparent substrate 1 is substantially equal to the outer diameter of a cylindrical portion 8b of a jig 8, and the diameter of a spindle hole 5a of the magnetic plate 5 is substantially equal to the outer diameter of a center pin 8c of the jig 8. The transparent substrate 1 is centered with respect to the center hub 4 by means of the jig 8, as described above.

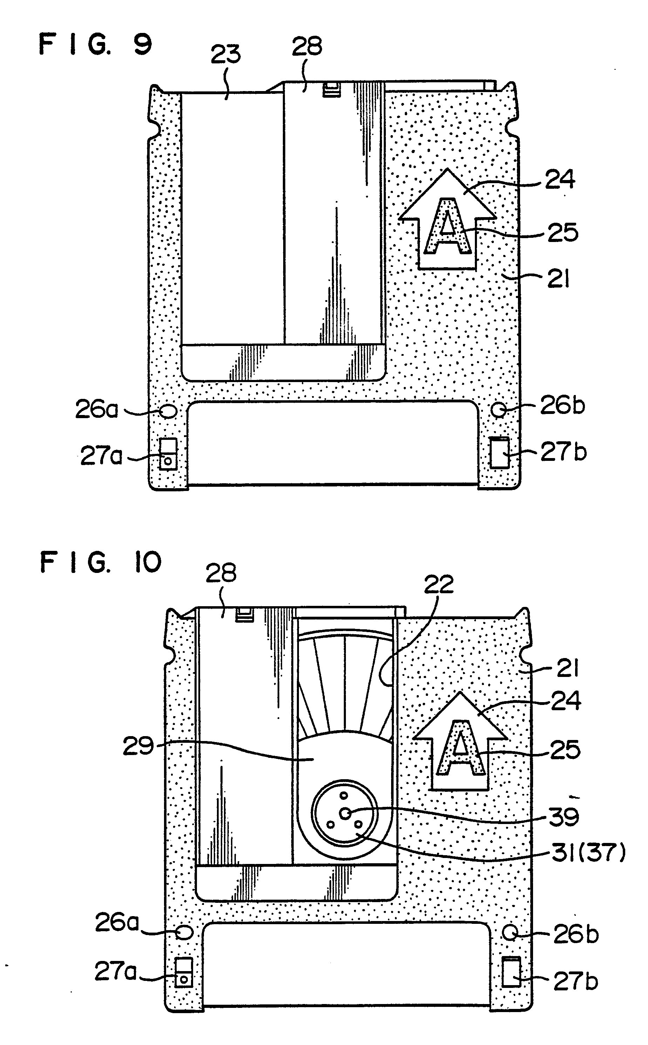

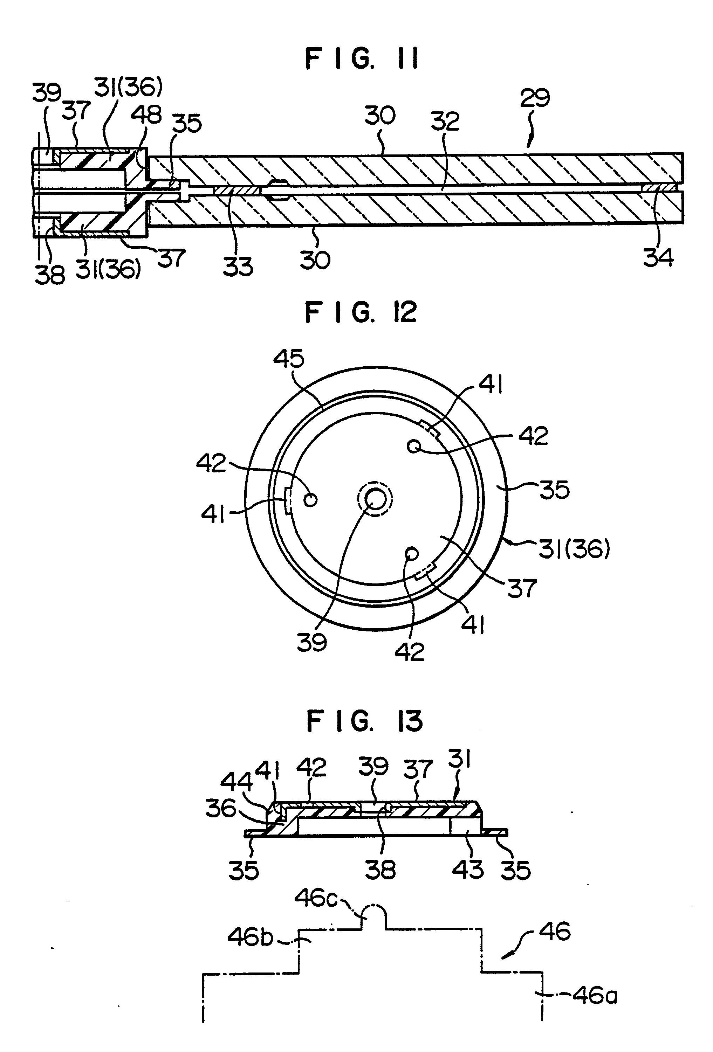

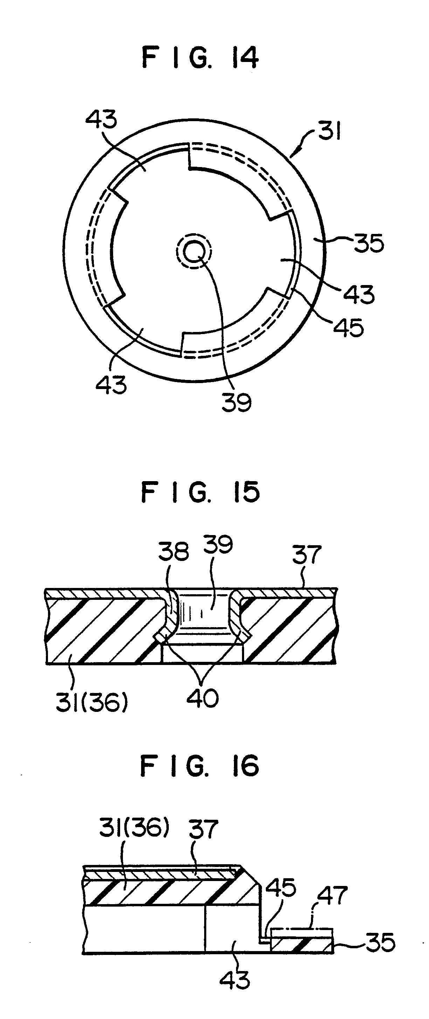

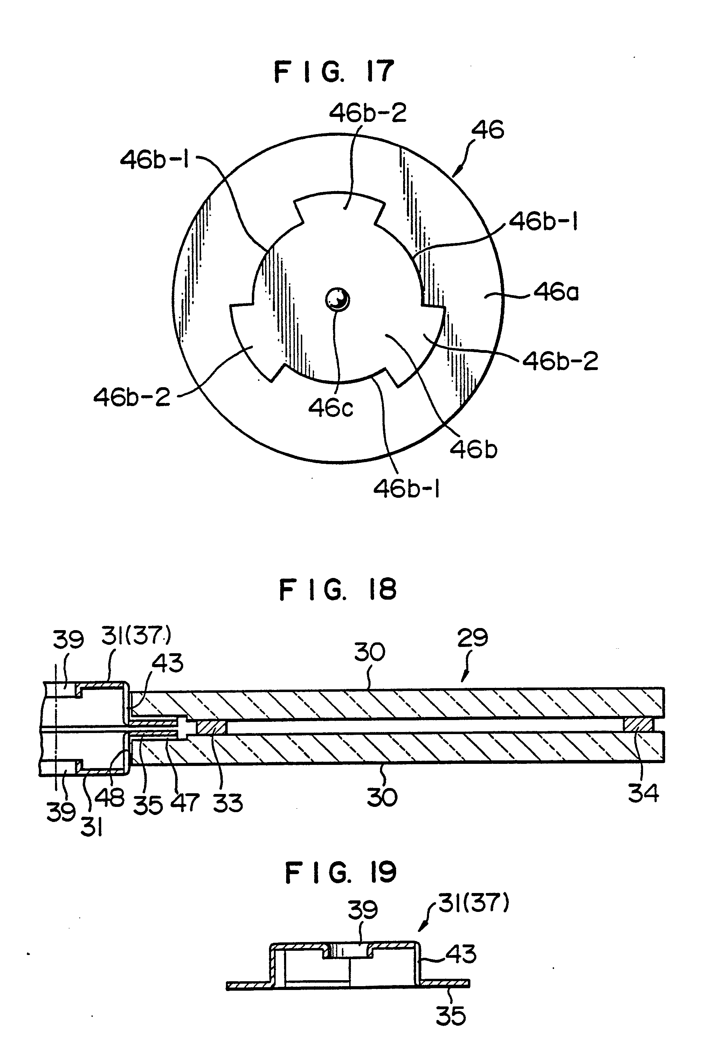

Figs. 9 to 17 show a fourth embodiment of the present invention. Figs. 9 and 10 show an optical disk of this embodiment contained in an optical disk cartridge, and more specifically are plan views of the disk cartridge in a closed condition of its shutter and in an open condition of the shutter, respectively. Fig. 11 is a sectional view of a portion of the optical disk. Fig. 12 is a plan view of a center hub. Fig. 13 is a sectional view of the center hub. Fig. 14 is a bottom view of the center hub. Fig. 15 is an enlarged sectional view of a portion of the center hub in the vicinity of its spindle hole. Fig. 16 is an enlarged sectional view of an outer peripheral portion of the center hub. Fig. 17 is a plan view of an assembling jig.

The optical disk cartridge in this embodiment comprises broadly an upper case, a lower case, the optical disk, an inadvertent erasure prevention member for the recording on an A-surface of the disk, an inadvertent erasure prevention member for the recording on a B-surface of the disk, and the shutter.

A cartridge case 21 constituted by the upper and lower cases is molded of a synthetic resin such as polycarbonate, ABS resin, a mixture of polycarbonate and ABS resin, and a polypropylene. As shown in Fig. 10, a head access opening 22 of a slot-like shape is formed generally in a central portion of the cartridge case 21, this head access opening 22 being continuous with a drive shaft insertion opening. A generally left-half region of the cartridge case 21 including the head access opening 22 is slightly stepped downwardly with respect to the upper surface of the cartridge case 21 to provide a slide-guiding recessed portion 23 of a generally rectangular shape. The shutter 28 is movably provided in the slide-guiding recessed portion 23, and is always resiliently urged by a spring (not shown) in its closing direction.

An arrow mark 24 indicating the direction of insertion of the disk cartridge as well as a mark 25 indicating the side A (or the side B) is provided on that portion of the cartridge case 21 disposed adjacent to the slide-guiding recessed portion 23. Registration holes 26a and 26b composed of the combination of an oval hole and a circular hole are provided at the rear portion of the cartridge case 21 at the right and left sides thereof. The A-side inadvertent erasure prevention member 27a and the B-side inadvertent erasure prevention member 27b are provided rearwardly of the registration holes 26a and 26b, respectively, and are disposed symmetrically with respect to the central plane of the cartridge case 21, the two inadvertent erasure prevention members 27a and 27b being movable.

As shown in Fig. 11, the optical disk 29 rotatably housed in the cartridge case 21 mainly comprises transparent substrates 30 of a disk-shape each having at one side a recording layer (not shown) having tracks of fine pits and projections formed by preformed grooves or preformed pits, center hubs 31 adhesively bonded respectively to the inner peripheral portions of the two transparent substrates 30, and a pair of inner and outer peripheral spacers 33 and 34 interposed between the two transparent substrates 30 to provide an air gap 32 of a predetermined thickness. The recording layers on the two transparent substrates 30 are directed inwardly, that is, toward each other.

The center hub 31 comprises a holder 36 of a synthetic resin having substantially the same coefficient of thermal expansion as the transparent substrate 30, and a magnetic plate 37 integrally connected to the holder 36. In this embodiment, the transparent substrate 30 and the center hub 31 are both made of polycarbonate having a thermal expansion coefficient of $8 \times 10^{-5}$ cm cm/$^\circ$C. The holder 36 has a radially-outwardly extending flange 35 at its outer peripheral portion, the flange 35 being adapted to be adhesively bonded to the transparent substrate 30. The magnetic plate 37 is embedded in the central portion of upper surface of the holder 36 by injection molding.

The upper surface of the magnetic plate 37 is exposed from the holder 36 so as to be disposed in opposed relation to a permanent magnet provided on a spindle hub of a disk drive device. As shown in Figs. 13 and 15, an integral inner peripheral wall 38 is formed by bending at the central portion of the magnetic plate 37, and the peripheral wall 38 defines a spindle hole (internal bore) 39 into which a center pin of the above spindle hub is adapted to be inserted. As shown in Fig. 15, a distal end portion 40 of the inner peripheral wall 38 is slightly bent radially outwardly, so that the edge of the distal end portion 40 will not be brought into direct contact with the above spindle hub and a center pin of the assembling jig. In addition, the edge of the distal end portion 40 is directed into the holder 36 to serve to prevent the magnetic plate 37 from being disengaged from the holder 36.

At least one tongue 41 depends from the outer periphery of the magnetic plate 37 (in this embodiment, there are provided three tongues 41 spaced from each other at equal or regular intervals in the direction of the circumference of the magnetic plate 37). As shown in Fig. 13, the tongues 41 are embedded in the holder 36 to serve to prevent the magnetic plate 37 from being disengaged from the holder 36. As shown in Figs. 12 and 13, a plurality of positioning holes 42 are formed through the magnetic plate 37 (in this embodiment, there are provided three positioning holes 42 circumferentially spaced from one another at equal intervals). When the holder 36 is to be injection-molded on the magnetic plate 37, the injection molding is carried out, with registration or positioning pins on a mold being fitted respectively in the positioning holes 42, so that the magnetic plate 37 is embedded in the holder 36 coaxially therewith, as later described.

In order to ensure a proper tracking during the recording and reproduction of signals, it is necessary to adhesively bond the transparent substrate 30 and the center hub 31 together in such a manner that the imaginary center of the tracks of the preformed grooves is accurately aligned with the axis of the center hub 31. For this reason, as shown in Figs. 13 and 14, a plurality of (three in this embodiment) notches or openings 43 are formed in the center hub 31 (holder 36) and are spaced circumferentially at equal intervals, and a connective portion 44 is provided between each two adjacent notches 43. In order that the length of each tongue 41 of the magnetic plate 37 can be made as long as possible, the tongues 41 are embedded in the connective portions 44, respectively. The magnetic plate 37 is positioned by the positioning holes 42 within the mold so that each tongue 41 can be positioned accurately at the center of its corresponding connective portion 44.

As shown in Figs. 12 and 16, an annular groove 45 of a channel-shaped cross-section is formed in the upper surface of the flange 35 at its proximal portion.

In order to integrally connect the transparent substrate 30 and the center hub 31 together in registration with each other, the registration or alignment jig 46 shown in Figs. 13 and 17 is used. The jig 46 is made of a wear-resistant material such as stainless steel (SUS 304 or ferrite-type SUS), and has a base portion 46a, a short cylindrical portion 46b formed on the base portion 46a, and a center pin 46c formed on the cylindrical portion 46b. The axis of the cylindrical portion 46b is precisely aligned with the axis of the center pin 46c, and the outer periphery of each of the cylindrical portions 46b and the center pin 46c is finished into a true circular shape.

A plurality of (three in this embodiment) fan-shaped notches 46b-1 are formed or cut in the outer peripheral portion of the cylindrical portion 46b, and are circumferentially spaced from one another at equal intervals, so that a plurality of (three in this embodiment) fan-shaped projections 46b-2 are provided. The fan-shaped projections 46b-2 are so arranged as to correspond respectively to the notches or openings 43 in the holder 31 shown in Fig. 14, so that the projections 46b-2 can be fitted in the notches 43, respectively.

For adhesively bonding the transparent substrate 30 and the center hub 31 together, an adhesive 47, such as an ultraviolet ray-curing adhesive, an epoxy-type adhesive and a urethane-type adhesive, is beforehand deposited uniformly on the upper surface of the flange 35, as shown in Fig. 16.

Then, the center pin 46c of the jig 46 is inserted into the spindle hole 39 of the center hub 31, and the fan-shaped projections 46b-2 of the jig 46 are fitted in the notches 43 of the holder 36, respectively. Thus, the center hub 31 is first positioned on the jig 46.

Then, in this condition, the center hub 31 is inserted into a reference hole 48 (see Fig. 11) formed through the transparent substrate 30 at the central portion thereof, so that the outer peripheral surfaces of the fan-shaped projections 46b-2 exposed outwardly through the respective notches or openings 43 in the center hub 31 are brought into contact with the inner peripheral surface of the reference hole 48 in a press-fitting manner. As a result, the transparent substrate and the center hub 31 are connected together in such a manner that the axis of the reference hole 48 of the transparent substrate 30 is aligned with the axis of the spindle hole 39 of the center hub 31 thanks to the jig 46. In this condition, the adhesive 47 is cured, so that the imaginary center of the tracks of the preformed grooves is precisely aligned with the axis of the center hub 31.

Figs. 18 to 20 show a fifth embodiment of the present invention. Fig. 18 is a sectional view of a portion of an optical disk, and Fig. 19 is a sectional view of a center hub, and Fig. 20 is a plan view of the center hub.

The optical disk of this embodiment differs from the optical disk 29 of Fig. 11 in the construction of the center hub 31.

More specifically, in this embodiment, the center hub 31 is made solely of a magnetic plate 37. The magnetic plate 37 has a generally cap-shape, and has a spindle hole 39 at its central portion. A plurality of (three in this embodiment) notches or openings 43 are formed in a cylindrical portion of the magnetic plate 37, and as shown in Fig. 18, an adhesive 47 is deposited on an upper surface of a flange 35 so that the flange 35 can be adhesively bonded to a transparent substrate 30.

Figs. 21 and 22 show sixth and seventh embodiments of the present invention, respectively.

In the sixth embodiment of Fig. 21, a central portion of a transparent substrate 30 is raised, and a reference hole 48 and a through hole 49 smaller in diameter than the reference hole 48 are formed in this raised central portion in concentric relation to each other.

In this sixth embodiment, a center hub 31 is made solely of a magnetic plate 37 having a spindle hole 39 at its central portion. The center hub 31 is secured to the upper surface of the central portion of the transparent substrate 30 by an adhesive.

In the seventh embodiment of Fig. 22, a transparent substrate 30 has a reference hole 48 formed therethrough at its central portion. In this embodiment, a center hub 31 is made solely of a relatively thick magnetic plate 37, and a spindle hole 39 is formed through the central portion of the magnetic plate 37. The center hub 31 is secured to the upper surface of the central portion of the transparent substrate 30 by an adhesive.

In the sixth and seventh embodiments, when the magnetic plate 31 (37) is to be secured to the transparent substrate 30, the cylindrical portion 8b (more specifically, the fan-shaped projections 8b-2) of the jig 8 shown in Fig. 2 is press-fitted into the central hole or recess 48 of the transparent substrate 30, so that the center pin 8c of the jig 8 is fitted into the central hole (spindle hole) 39 of the magnetic plate 31, thus fixing magnetic plate 31 relative to the transparent substrate 30, and the magnetic plate 31 is bonded to the transparent substrate 30 by the adhesive under the thus fixed relative position.

The optical disks described above can be produced efficiently on a mass-production basis by the above-mentioned methods using the assembling jig, and the thus produced optical disks are stable in quality.

## Claims

1. A method of producing an optical disk, comprising the steps of:
providing a jig having a cylindrical portion and a center pin formed on said cylindrical portion coaxially therewith;
providing a transparent substrate having a reference hole formed therein at its central portion and disposed coaxially with an imaginary center of beam-tracking tracks, on said substrate, constituted by preformed pits and projections which tracks are spaced at predetermined intervals radially outwardly of said reference hole;
fitting said cylindrical portion of said jig into said reference hole in said transparent substrate; and
inserting said center pin of said jig into a spindle hole, formed in a spindle hole-containing member, against movement relative to said spindle hole, and subsequently securing said spindle hole-containing member to a central portion of said transparent substrate while keeping relative positions thereof, said spindle hole being smaller in diameter than said reference hole in said transparent substrate.

2. A method according to claim 1, in which a plurality of notches are formed in an outer peripheral surface of said cylindrical portion of said jig.

3. A method according to claim 1, in which said cylindrical portion of said jig is press-fitted into said reference hole in said transparent substrate.

4. A jig for assembling an optical disk includes:
a cylindrical portion adapted to be fitted in a registration reference hole formed in a transparent substrate at its central portion, said transparent substrate having beam-tracking tracks of preformed pits and projections which tracks are spaced at predetermined intervals radially outwardly of said reference hole and are concentric therewith; and

a center pin formed integrally on said cylindrical portion coaxially therewith, said center pin being adapted to be inserted into a spindle hole formed in a spindle hole-containing member at a central portion thereof.

5. A jig according to claim 4, in which said cylindrical portion and said center pin are both made of a wear-resistant material.

6. An optical disk comprising:
a transparent substrate having a registration reference hole formed therein at its central portion, said transparent substrate having beam-tracking tracks of preformed pits and projections which tracks are spaced at predetermined intervals radially outwardly of said reference hole and are concentric therewith; and
a spindle hole-containing member having a spindle hole smaller in diameter than said reference hole in said transparent substrate, said spindle hole-containing member being positioned relative to said transparent substrate by means of a jig in such a manner that the axis of rotation of said spindle hole is aligned with the axis of said reference hole disposed coaxially with each other, and said spindle hole-containing member being secured to said transparent substrate.

7. An optical disk according to claim 6, in which said spindle hole-containing member has a cylindrical portion having notches formed therein.

8. An optical disk according to claim 7, in which said spindle hole-containing member has a radially outwardly-directed flange formed on said cylindrical portion of said spindle hole-containing member, notches being formed in said flange, so that said flange has flange sections spaced form one another by said notches.

9. An optical disk according to claim 8, in which there are provided first and second said transparent substrates disposed in opposed relation to each other, first and second said spindle hole-containing members being fixedly secured respectively to said first and second transparent substrates, said flange sections of said flange of said first spindle hole-containing member being fitted respectively in said notches in said flange of said second spindle hole-containing member whereas said flange sections of said second spindle hole-containing member are fitted in said notches in said flange of said first spindle hole-containing member, and the opposite sides of said flange sections of said flanges of said first and second spindle hole-containing members being bonded to the opposed surfaces of said first and second transparent substrates, respectively.

10. An optical disk according to claim 8, in which said spindle hole in said spindle hole-containing member is made from a magnetic material.

11. An optical disk according to claim 6, in which said spindle hole-containing member comprises a metallic plate having said spindle hole therethrough, and a cylindrical portion below the metallic plate, the metallic plate being fixed to an upper face of the cylindrical portion, said cylindrical portion having at least two notches opened to a peripheral wall of the reference hole of said transparent substrate.

12. An optical disk according to claim 11, in which the metallic plate comprises a magnetic metallic plate.

13. An optical disk according to claim 11, in which a part of the metallic plate is embedded in the cylindrical portion, and the metallic plate is provided with a part for preventing the metallic plate from being disengaged from the cylindrical portion.

14. An optical disk according to claim 11, in which said transparent substrate and the cylindrical portion are made from a same material.

# F I G. 1

# F I G. 2

# F I G. 3

# F I G. 4

# F I G. 5

# FIG. 6

# FIG. 6A

# F I G. 7

5a
5
5b
5b
5c

# F I G. 8

1
6
5
5a
4
2
3
1a
8c
8b
8

FIG. 9

FIG. 10

# F I G. 11

# F I G. 12

# F I G. 13

# F I G. 14

43   31

35

43

45

43

39

# F I G. 15

38   39   37

31(36)   40

# F I G. 16

31(36)   37

45   47

35

43

# F I G. 17

46b-2
46b-1
46
46b-1
46a
46b-2
46b-2
46c
46b
46b-1

# F I G. 18

39 31(37) 43 30 29
39 31 48 35 47 33 30 34

# F I G. 19

39 31(37) 43
35

# F I G. 20

# F I G. 21

# F I G. 22

# F I G. 23

# DOCUMENTS CONSIDERED TO BE RELEVANT

EP 90302296.0

| Category | Citation of document with indication, where appropriate, of relevant passages | Relevant to claim | CLASSIFICATION OF THE APPLICATION (Int Cl⁵) |
|---|---|---|---|
| X | PATENT ABSTRACTS OF JAPAN, unexamined applications, P field, vol. 11, no. 170, June 2, 1987 THE PATENT OFFICE JAPANESE GOVERNMENT page 65 P 581 * Kokai-no. 62-1 147 (HITACHI MAXELL LTD) * -- | 1,6 | G 11 B 7/26 G 11 B 7/24 |
| A | PATENT ABSTRACTS OF JAPAN, unexamined applications, P field, vol. 9, no. 167, July 12, 1985 THE PATENT OFFICE JAPANESE GOVERNMENT * Kokai-no. 60-43 242 (SHARP K.K.) * -- | 1,6 | |
| A | EP - A1 - 0 243 517 (MATSUSHITA ELECTRIC INDUSTRIAL CO. LTD.) * Fig. 3-16; abstract * ---- | 1,2,6, 7 | TECHNICAL FIELDS SEARCHED (Int Cl⁵) G 11 B 7/00 G 11 B 5/00 G 11 B 23/00 |

The present search report has been drawn up for all claims

| Place of search | Date of completion of the search | Examiner |
|---|---|---|
| VIENNA | 31-05-1990 | BERGER |